# EUROPEAN PATENT SPECIFICATION

(11) **EP 1 673 981 B1**
(45) Date of publication and mention of the grant of the patent: **29.07.2015**
(21) Application number: 05077659.0
(22) Date of filing: 23.11.2005
(51) Int. Cl.: A23G 9/28

(54) **Apparatus and process for preparing a frozen confection**
Vorrichtung und Verfahren zur Herstellung einer gefrorenen Süssware
Dispositif et procédé de preparation d'une confiserie gelée

(30) Priority: 21.12.2004 EP 04257979
(43) Date of publication of application: 28.06.2006
(73) Proprietor: Unilever PLC, London EC4Y 0DY (GB); Unilever N.V., 3013 AL Rotterdam (NL)
(72) Inventor: D'Esposito, Lucio, 00124 Rome (IT); Paesano, Anna, 00124 Rome (IT); Russo, Domenico, 00124 Rome (IT)
(74) Representative: Acham, Nicholas Clive

(56) References cited:
- GB-A- 773 404
- GB-A- 1 076 117
- US-A- 3 477 393
- US-A- 5 603 965
- US-B1- 6 284 294
- US-B1- 6 514 555
- PATENT ABSTRACTS OF JAPAN vol. 004, no. 030 (C-002), 15 March 1980 (1980-03-15) & JP 55 007008 A (GIFU YUKIREIKA KK), 18 January 1980 (1980-01-18)

## Description

### Field of the Invention

The present invention relates to an apparatus and a process for preparing frozen confections. In particular the present invention relates to the rotary extrusion of ice cream.

### Background to the Invention

Frozen confections, such as ice creams, water ices, sorbets and the like are popular foodstuffs which are often consumed for pleasure, i.e. as a snack, dessert or treat. In order to maintain the appeal of such products, manufacturers are constantly seeking to create novel formats, appearances and textures for surprising and exciting the consumer.

It has been identified in the art that spiral product architectures which enhance the appearance and texture of frozen confections can be obtained by simultaneously extruding a plurality of flows of one or more frozen compositions through a rotary nozzle.

EP 0 044 689 A1 discloses a process and apparatus for preparing an ice confection by extruding the ice confection from a rotating nozzle. The extruded material passes on to an elongate travelling conveyer which does not share the rotational motion of the extrusion nozzle, thereby to lay down on the conveyor an extended spirally-formed extrudate. The extrudate is then chopped into segments thereby to create individual products.

Whilst such a process is ideally suited to the production of stick-type products (e.g. ice lollies), unfortunately, it is unsuitable for the production of cone or cornet-type products which require vertical extrusion of a frozen composition into an edible receptacle (i.e. a wafer cone) in a non-extended form. Furthermore, separation of the extrudate by chopping results in a rather abrupt and unappealing appearance at the severed (i.e. terminal) ends of the products and is unsuited to creating the fluted appearance desirable for cone-type products.

JP 55 92656 A discloses an apparatus for the rotary extrusion of ice cream into an edible receptacle. The apparatus comprises a rotating disc having a central nozzle for spiral extrusion of ice cream and a pipe for extruding spirally a sheath ingredient. The disc is made to rotate whilst extruding ice cream into the receptacle and, when the ice cream comes to the edge of the receptacle, chocolate, jam or other paste is extruded from the outlet of the pipe thereby to form a spiral of sheath ingredient. The extrusion of ice cream and sheath ingredient is controlled by the supply of ice cream and sheath ingredient to the nozzle.

Despite the fact that such an apparatus and process is capable of producing cone-type products comprising a spiral extrudate, control of the extrudate by the supply of ingredients to the nozzle can result in poor definition and unappealing appearance at the terminal end of the extrudate. This is particularly the case when extruding compressible materials such as aerated ice cream as cessation of the flow upstream from the nozzle results in depressurisation and expansion of ice cream within the nozzle which may lead to seepage of material from the nozzle exit.

There is thus a need for an apparatus and process capable of producing frozen confectionary products, especially cone-type products, having a spiral appearance whilst allowing for the ability to provide a well-defined and appealing terminal surface, e.g. in the form of well-defined flutes.

We have found that it is possible to achieve such a goal by controlling the location at which rotary extruded flows of frozen composition are interrupted.

### Tests and Definitions

### Frozen confection

As used herein, the term "frozen confection" refers to a sweet-tasting fabricated foodstuff intended to be consumed in the frozen state (i.e. under conditions wherein the temperature of the foodstuff is less than 0°C, and preferably under conditions wherein the foodstuff comprises significant amounts of ice). Typical examples of frozen confections include ice creams, water ices and sorbets.

### Frozen composition

As used herein, the term "frozen composition" refers to an edible foodstuff having a temperature of less than 0°C. Where reference is made to multiple frozen compositions it is to be understood that each frozen composition may differ only in minor ingredients such as colour or flavour. Alternatively, each frozen composition may differ in major ingredients, e.g. a first composition may be a water ice or sauce composition whilst a second composition may be an ice cream composition, and/or a first composition may be aerated whilst a second composition may be unaerated.

### Brief Description of the Invention

In a first aspect, the present invention provides an apparatus for preparing a frozen confection, the apparatus comprising:
(i) a nozzle having a at least three passages therethrough, the passages each comprising an inlet port and an outlet port,
(ii) a feeder means for supplying one or more streams of one or more frozen compositions to the inlet ports of the passages,
(iii) a drive means for rotating the nozzle; and
(iv) a sealing means for sealing one or more of the passages.

We have found that such an apparatus allows for producing frozen confectionery products with an intricate spiral appearance. In particular, we have found that provision of such an apparatus with a sealing means for sealing one or more of the passages, allows for the creation of products with a well-defined and visually appealing terminal surface, e.g. in the form of well-defined flutes.

As referred to herein, the term "sealing" refers to the blockage of a passage such as to prevent the flow of frozen composition along the passage. The sealing means may be for sealing at least one of the passages at a point between the inlet and outlet ports of the at least one of the passages and/or for sealing at least one of the passages at the outlet ports of the at least one of the passages. Preferably, the sealing means are not more than 1 m preferably, less than 50 cm, even more preferably less than 25 cm away from the outlet ports.

Preferably the sealing means is for simultaneously sealing at least two of the passages and more preferably the sealing means is for simultaneously sealing all of the passages. Simultaneously sealing the passages allows for a particularly clean and efficient interruption of the flow of frozen composition and results in an especially well-defined appearance to the terminal surface of the frozen confection.

Preferably, the sealing means is for independently sealing one or more of the passages, more preferably the sealing means is for independently sealing all of the passages. By "independently" is meant that the sealing means allows for interruption of the flow of frozen composition within a passage whilst allowing flow to continue in at least one other of the passages. With such independent sealing it is possible to create extrudates with complex spiral architectures, e.g. by sequentially sealing each of the passages and/or alternately sealing some of the passages and/or pulsing the flow in selected passages.

Preferably, the feeder means supplies at least two frozen compositions to the inlet ports of the passages. More preferably the feeder means supplies at least one stream of a first frozen composition to at least one of the inlet ports and at least one stream of a second frozen composition to at least one other of the inlet ports. In such a configuration, the apparatus is able to simultaneously and/or sequentially and/or alternatively extrude spirals with different appearance and/or taste.

In a particularly preferred embodiment, the drive means is for rotating the nozzle about a vertical axis as this allows for convenient filling of a spiral extrudate into a receptacle

It is preferable that the passages are substantially aligned in a single direction as this allows for the use of relatively simple sealing means, such as a series of parallel piston valves.

Preferably the single direction is vertical, more preferably vertically downwards, as this allows for simple filling of the extrudate into a receptacle. It is also preferred that the drive means is for rotating the nozzle about an axis parallel to the direction of alignment of the passages as this minimises the influence of centrifugal force in the direction of flow and allows the possibility of entwining the extrudates exiting from the passages. In this respect, at least one of the outlets of the passages may be eccentrically disposed with respect to the axis of rotation of the nozzle.

In order to allow for the creation of extrudates with a helical structure it is preferable that the drive means is for rotating the nozzle at least 360°. Intricate appearances can also be created if the drive means is for rotating the nozzle both clockwise and anti-clockwise.

Preferably the apparatus comprises a second drive means, the second drive means being for translating the nozzle in a vertical and/or horizontal direction. Such a second drive means allows for the nozzle to be raised, lowered and/or moved sideways while extruding and/or between extrusions. Thus allowing for the nozzle to be inserted inside a receptacle to be filled, i.e. to allow more complete filling of the receptacle. Such a second drive means also allows for the creation of even more complex product architectures.

In a preferred embodiment the apparatus further comprises a carrier means for moving a receptacle to a location for receiving the frozen confection from the nozzle. The carrier means is typically a conveyer such as a belted conveyer or a pocket conveyor. The receptacle may be of any suitable food-safe material and is, for example, a plastic tray or tub. In a particularly preferred embodiment the receptacle is an edible receptacle, such as a wafer cone or cornet.

It is preferable that the sealing means is indexed to the movement of the receptacle. Such indexing allows, for example, for cessation of extrusion whilst the receptacle is not at a location for receiving the frozen confection from the nozzle.

In a second aspect, the present invention provides a process for preparing a frozen confection. The process comprising simultaneously extruding at least three of flows of one or more frozen compositions through a nozzle whilst rotating the nozzle and interrupting at least one of the plurality of flows within the nozzle.

We have found that such a process produces frozen confectionery products with an intricate spiral appearance. In particular, we have found that interruption of the flow within the nozzle allows for the creation of products with a well-defined and visually appealing terminal surface, e.g. in the form of well-defined flutes.

As referred to herein, the term "interruption of the flow within the nozzle" refers to the creation of a blockage within the nozzle that prevents the flow of frozen composition therethrough. Preferably interruption occurs whilst the nozzle is rotating.

In a particularly preferred embodiment the nozzle is rotated about a vertical axis as this allows for simple filling of a spiral extrudate into a receptacle

It is preferable that the plurality of flows of the one or more frozen compositions are extruded through the nozzle in a single flow direction as this allows for the use of relatively simple sealing means, such as a series of parallel piston valves. Preferably the single direction is vertical, more preferably vertically downwards, as this allows for simple filling of the extrudate into a receptacle. It is also preferred that the nozzle is rotated about an axis parallel to the flow direction as this minimises the influence of centrifugal force in the direction of flow and allows the possibility of entwining the flows on exiting the nozzle. In this respect, at least one of the flows may exit the nozzle at a position eccentrically disposed with respect to the axis of rotation of the nozzle.

Preferably, at least one of the at least three of flows is independently interrupted within the nozzle, more preferably all of the plurality of flows is independently interrupted within the nozzle. By "independently" is meant that the flow of frozen composition ceases whilst at least one other of the plurality of flows of frozen composition continues. With such independent interruption it is possible to create extrudates with complex spiral architectures, e.g. by sequentially interrupting each of the flows and/or alternately interrupting some of the flows and/or pulsing selected flows.

Preferably at least two of the plurality of flows are interrupted simultaneously within the nozzle, more preferably all of the plurality of flows are interrupted simultaneously within the nozzle. Simultaneous interruption of the flows results in an especially well-defined appearance to the terminal surface of the frozen confection.

Preferably, the plurality of flows comprises a first flow of a first frozen composition and a second flow of a second frozen composition. The plurality of flows additionally comprises a third flow of a third frozen composition. Such a process allows the creation of spiral extrudates with intricate and/or contrasting shapes and/or textures.

In a third aspect the invention provides a frozen confection obtainable by the process of the invention. Such a frozen confection would comprise at least two spiral extrudates, with at least one of the spiral extrudates having a well-defined and visually appealing terminal surface, e.g. in the form of flutes. At least one of the spiral extrudates may be interrupted and/or of substantially shorter length with respect to at least one other of the spiral extrudates. In addition, at least one of the spiral extrudates may be of a first frozen composition different from at least one other of the spiral extrudates.

### Brief Description of the Drawings

The invention is further described with reference to the accompanying drawings in which:
Figure 1 is a schematic view of an embodiment of an apparatus according to the invention;
**Figure 2a** is a cross-sectional elevation along B-B of a filling head for use in an embodiment of an apparatus according to the invention;
Figure 2b is a cross-sectional elevation along A-A of the filling head of figure 2a.

### Detailed Description of the Invention

The invention will be described with reference to the following preferred embodiment.

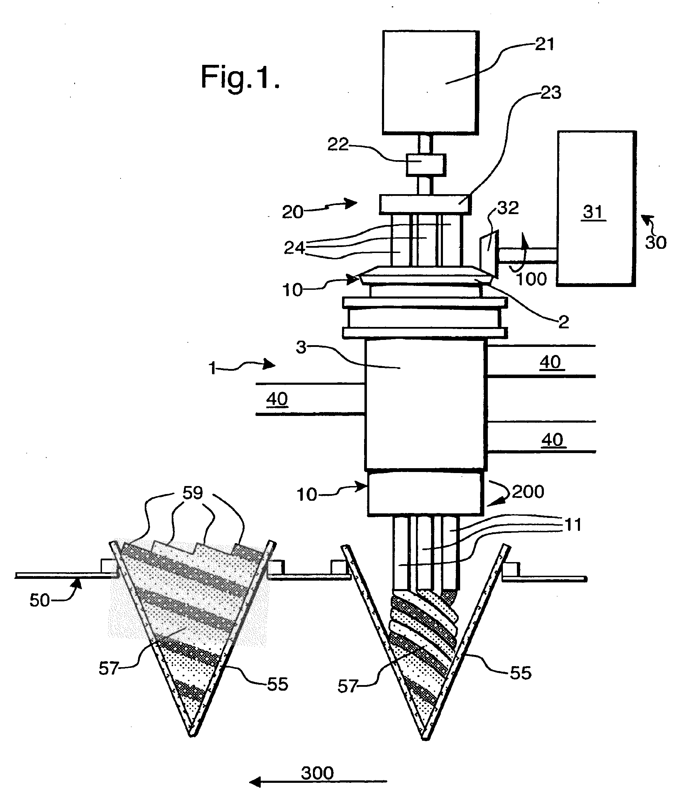

Figure 1 illustrates a first embodiment of an apparatus according to the invention during a filling step. The apparatus comprises a filling head (1) positioned above a conveyer (50) carrying a plurality of wafer cones (55). The filling head (1) has attached thereto a sealing means (20) and a drive means (30).

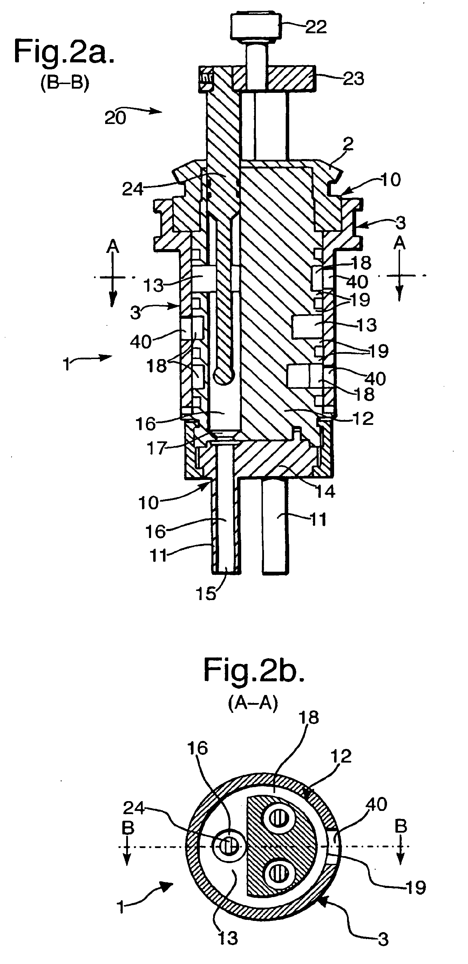

The filling head (1) and sealing means (20) are shown in detail in Figures 2a and 2b.

The filling head (1) comprises a tubular sheath (3) coaxial with and partially surrounding a rotary nozzle (10). The tubular sheath has extending radially therefrom a plurality (e.g., three) of inlet pipes (40) through which a feeder means (e.g. one or more ice cream freezers - not shown) supplies each with a stream of frozen composition.

The nozzle (10) comprises a gear section (2), a body section (12) and a spout section (14). The gear section (2) is fixedly attached to the top of the body section (12) which in turn is fixedly attached to the spout section (14). The body section (12) is substantially cylindrical and has a plurality (e.g. three) of eccentrically disposed cylindrical passages (16) extending longitudinally therethrough. Each passage (16) narrows at the base of the body section (16) to form a valve seat (17) before extending downwards through the spout section (14) and terminating in a tubular portion (11). The passages also extend upwards through the top surface of the gear section (2). Each passage has a single inlet port (13) located within the body section (12) and a single outlet port (15) located at the base of the tubular portion (11) of the spout section (14). Annular recesses (18) in the body section (12) provide that each inlet port (13) is in fluid communication with an inlet pipe (40) of the sheath (3). The passages (16) are not in fluid communication with each other owing to the presence of a series of annular seals (19) disposed between adjacent annular recesses (18).

The sealing means (20) comprises a pneumatic drive cylinder (21) attached to the upper face of a disc portion (23) by means of a hinge bearing (22), there being a plurality (e.g. three) piston rods (24) eccentrically disposed about the lower face of the disc portion (23) and extending downwards therefrom. Each piston rod (24) extends partially into a passage (16) of the nozzle (10), and terminates in a spherical portion which is shaped to sealingly engage with the valve seat (17) of the passage (16) when in a closed position (not shown).

The drive means (30) comprises a motor (31) which drives a gear section (32) which is in rotatable engagement with the gear section (2) of the nozzle (10).

In use, the conveyer (50) translates an empty wafer cone (55) along a horizontal direction (300) until it is below the tubular portions (11) of the nozzle (10), where the cone is held static for filling. The filling head (1) is then lowered by means of a second drive means (not shown) to a position wherein the base of the tubular portions (11) is in the vicinity of the apex of the cone (55).

The motor (31) then rotates the gear section (32) about a horizontal axis (100) which in turn rotates the nozzle (10) around a vertical axis (200). The nozzle rotates within the tubular sheath (3) which is held static with respect to the rotational motion of the nozzle (10). In contrast, owing to the presence of the hinge bearing (22), the disc (23) and piston rods (24) of the sealing means (20) share the rotational motion of the nozzle (10).

The pneumatic cylinder (21), which until this time had been holding the disc (23) in a lowered position such that each of the piston rods (24) was engaged with a valve seat (17) of a passage (16), is then actuated and moves the disc (23) to a raised position, thus lifting the piston rods (24) from their valve seats (17) and allowing frozen composition to flow through the passages (16) and out of the outlet ports (15).

Each of the inlet pipes (40) may be fed with a different frozen composition such that the spiral extrudate (57) formed below the nozzle (10) comprises three intertwined helices of different composition.

As the extrudate (57) is formed and the cone (55) is filled, the filling head (1) is progressively raised to keep the outlet ports (15) slightly above the filling line. Once the filling line reaches the upper rim of the cone (55), the pneumatic cylinder (21) is actuated and moves the disc (23) back to the lowered position such that each of the piston rods (24) is sealingly engaged in a valve seat (17) and the flows of frozen composition are interrupted within the nozzle (10). Simultaneously with actuation of the pneumatic cylinder (21), the motor (31) is shut off to cease the rotational motion of the nozzle and the filling head is raised such that the tubular portions (11) are clear of the cone (55). The terminal surface of the extrudate (57) now has the appearance of a plurality of well-defined flutes (59).

The conveyer (50) then carries the filled cone (55) away from the filling head (e.g. to a hardening tunnel - not shown) whilst simultaneously translating an empty cone (55) to the position below the tubular portions (11) of the nozzle (10), ready to be filled.

## Claims

1. An apparatus for preparing a frozen confection, the apparatus comprising:
(i) a nozzle (10) having **at least three** passages (16) therethrough, the passages each comprising an inlet port (13) and an outlet port (15),
(ii) a feeder means for supplying one or more streams of one or more frozen compositions to the inlet ports (13) of the passages (16), and
(iii) a drive means (30) for rotating the nozzle (10);
**characterised in that** the apparatus further comprises:
(iv) a sealing means (20) for sealing one or more of the passages (16).

2. An apparatus according to claim 1 wherein the sealing means (20) is for simultaneously sealing two or more of the passages (16).

3. An apparatus according to claim 2 wherein the sealing means (20) is for simultaneously sealing all of the passages (16).

4. An apparatus according to any preceding claim wherein the sealing means (20) is for independently sealing one or more of the passages (16).

5. An apparatus according to claim 4 wherein the sealing means (20) is for independently sealing all of the passages (16).

6. An apparatus according to any preceding claim wherein the drive means (30) is for rotating the nozzle (10) about a vertical axis.

7. An apparatus according to any preceding claim wherein the passages (16) are aligned in a single direction.

8. An apparatus according to claim 7 wherein the single direction is vertical.

9. An apparatus according to claim 7 wherein the drive means (30) is for rotating the nozzle (10) about an axis parallel to the direction of alignment of the passages (16).

10. An apparatus according to any preceding claim wherein the drive means (30) is for rotating the nozzle (10) at least 360°.

11. An apparatus according to any preceding claim wherein the apparatus further comprises a second drive means, the second drive means being for translating the nozzle (10) in a vertical and/or horizontal direction.

12. An apparatus according to any preceding claim further comprising a carrier means (50) for moving a receptacle (55) to a location for receiving the frozen confection from the nozzle (10).

13. An apparatus according to claim 12 wherein the sealing means (20) is indexed to the movement of the receptacle (55).

14. A process for preparing a frozen confection, the process comprising simultaneously extruding **at least three** of flows of one or more frozen compositions through a nozzle whilst rotating the nozzle;
**characterised in that** at least one of the plurality of flows is interrupted within the nozzle.

15. A process according to claim 14 wherein the nozzle is rotated about a vertical axis.

16. A process according to claim 14 or claim 15 wherein the plurality of flows of the one or more frozen compositions is extruded through the nozzle in a single flow direction.

17. A process according to claim 16 wherein the nozzle is rotated about an axis parallel to the flow direction.

18. A process according to claim 16 or 17 wherein the flow direction is vertical.

19. A process according to any one of claims 14 to 18 wherein the at least one of the plurality of flows is independently interrupted within the nozzle.

20. A process according to any one of claims 14 to 19 wherein all of the plurality of flows is independently interrupted within the nozzle.

21. A process according to claims 14 to 20 wherein all of the plurality of flows are simultaneously interrupted within the nozzle.

22. A process according to any one of claims 14 to 21 wherein the plurality of flows comprises a first flow of a first frozen composition and a second flow of a second frozen composition different from the first frozen composition.

23. A frozen confection obtainable by the process of any one of claims 14 to 22.

## Patentansprüche

1. Vorrichtung zur Zubereitung von gefrorenem Konfekt, wobei die Vorrichtung Folgendes umfasst:
(i) eine Düse (10), die mindestens drei Durchgänge (16) durch sie hindurch umfasst, wobei die Durchgänge jeweils eine Einlassöffnung (13) und eine Auslassöffnung (15) aufweisen,
(ii) eine Zuführungsvorrichtung zum Bereitstellen von einem oder mehreren Strömen von einer oder mehreren gefrorenen Zusammensetzungen an den Einlassöffnungen (13) der Durchgänge (16), und
(iii) eine Antriebsvorrichtung (30) zum Rotieren der Düse (10);
**dadurch gekennzeichnet, dass** die Vorrichtung ferner Folgendes umfasst:
(iv) eine Dichtungsvorrichtung (20) zum Abdichten von einem oder mehreren Durchgängen (16).

2. Vorrichtung nach Anspruch 1, wobei die Dichtungsvorrichtung (20) zum gleichzeitigen Abdichten von zwei oder mehr Durchgängen (16) dient.

3. Vorrichtung nach Anspruch 2, wobei die Dichtungsvorrichtung (20) zum gleichzeitigen Abdichten aller Durchgänge (16) dient.

4. Vorrichtung nach einem der vorhergehenden Ansprüche, wobei die Dichtungsvorrichtung (20) zum unabhängigen Abdichten von einem oder mehreren Durchgängen (16) dient.

5. Vorrichtung nach Anspruch 4, wobei die Dichtungsvorrichtung (20) zum unabhängigen Abdichten aller Durchgänge (16) dient.

6. Vorrichtung nach einem der vorhergehenden Ansprüche, wobei die Antriebsvorrichtung (30) zum Rotieren der Düse (10) um eine vertikale Achse dient.

7. Vorrichtung nach einem der vorhergehenden Ansprüche, wobei die Durchgänge (16) auf eine einzige Richtung ausgerichtet sind.

8. Vorrichtung nach Anspruch 7, wobei die einzige Richtung vertikal ist.

9. Vorrichtung nach Anspruch 7, wobei die Antriebsvorrichtung (30) zum Rotieren der Düse (10) um eine Achse parallel zur Richtung der Ausrichtung der Durchgänge (16) dient.

10. Vorrichtung nach einem der vorhergehenden Ansprüche, wobei die Antriebsvorrichtung (30) zum Rotieren der Düse (10) um mindestens 360° dient.

11. Vorrichtung nach einem der vorhergehenden Ansprüche, wobei die Vorrichtung ferner eine zweite Antriebsvorrichtung umfasst, wobei die zweite Antriebsvorrichtung zum Verschieben der Düse (10) in eine vertikale und/oder horizontale Richtung dient.

12. Vorrichtung nach einem der vorhergehenden Ansprüche, die ferner eine Trägervorrichtung (50) zum Bewegen eines Gefäßes (55) an einen Ort zum Aufnehmen des gefrorenen Konfekts von der Düse (10) umfasst.

13. Vorrichtung nach Anspruch 12, wobei die Dichtungsvorrichtung (20) auf die Bewegung des Gefäßes (55) indexiert ist.

14. Verfahren zur Zubereitung von gefrorenem Konfekt, wobei das Verfahren das gleichzeitige Ausstoßen von mindestens drei Strömen von einer oder mehreren gefrorenen Zusammensetzungen durch eine Düse, während die Düse gedreht wird, umfasst;
**dadurch gekennzeichnet, dass** mindestens einer der Mehrzahl von Strömen innerhalb der Düse unterbrochen wird.

15. Verfahren nach Anspruch 14, wobei die Düse um eine vertikale Achse gedreht wird.

16. Verfahren nach Anspruch 14 oder Anspruch 15, wobei die Mehrzahl von Strömen der einen oder der mehreren gefrorenen Zusammensetzungen durch die Düse in einer einzigen Strömungsrichtung ausgestoßen wird.

17. Verfahren nach Anspruch 16, wobei die Düse um eine Achse parallel zur Strömungsrichtung gedreht wird.

18. Verfahren nach Anspruch 16 oder 17, wobei die Strömungsrichtung vertikal ist.

19. Verfahren nach einem der Ansprüche 14 bis 18, wobei der mindestens eine Strom der Mehrzahl von Strömen unabhängig innerhalb der Düse unterbrochen wird.

20. Verfahren nach einem der Ansprüche 14 bis 19, wobei alle der mehreren Ströme unabhängig voneinander innerhalb der Düse unterbrochen werden.

21. Verfahren nach Ansprüchen 14 bis 20, wobei alle der mehreren Ströme gleichzeitig innerhalb der Düse unterbrochen werden.

22. Verfahren nach einem der Ansprüche 14 bis 21, wobei die mehreren Ströme einen ersten Strom einer ersten gefrorenen Zusammensetzung und einen zweiten Strom einer zweiten gefrorenen Zusammensetzung, die sich von der ersten gefrorenen Zusammensetzung unterscheidet, umfasst.

23. Gefrorenes Konfekt, das durch das Verfahren nach einem der Ansprüche 14 bis 22 erhalten werden kann.

## Revendications

1. Appareil de préparation d'une confiserie glacée, l'appareil comprenant :
(i) une buse (10) présentant au moins trois passages (16) à travers elle, les passages comprenant chacun un orifice d'entrée (13) et un orifice de sortie (15),
(ii) des moyens d'alimentation pour fournir un ou plusieurs flux d'une ou plusieurs compositions glacées aux orifices d'entrée (13) des passages (16), et
(iii) des moyens d'entraînement (30) pour faire tourner la buse (10) ;
**caractérisé en ce que** l'appareil comprend en outre :
(iv) des moyens de fermeture hermétique (20) pour fermer hermétiquement un ou plusieurs des passages (16).

2. Appareil selon la revendication 1, dans lequel les moyens de fermeture hermétique (20) sont conçus pour fermer hermétiquement en simultanée deux ou plus des passages (16).

3. Appareil selon la revendication 2, dans lequel les moyens de fermeture hermétique (20) sont conçus pour fermer hermétiquement en simultanée tous les passages (16).

4. Appareil selon l'une quelconque des revendications précédentes, dans lequel les moyens de fermeture hermétique (20) sont conçus pour fermer hermétiquement de manière indépendante un ou plusieurs des passages (16).

5. Appareil selon la revendication 4, dans lequel les moyens de fermeture hermétique (20) sont conçus pour fermer hermétiquement de manière indépendante tous les passages (16).

6. Appareil selon l'une quelconque des revendications précédentes, dans lequel les moyens d'entraînement (30) sont conçus pour faire tourner la buse (10) autour d'un axe vertical.

7. Appareil selon l'une quelconque des revendications précédentes, dans lequel les passages (16) sont alignés dans une seule direction.

8. Appareil selon la revendication 7, dans lequel la seule direction est verticale.

9. Appareil selon la revendication 7, dans lequel les moyens d'entraînement (30) sont conçus pour faire tourner la buse (10) autour d'un axe parallèle à la direction d'alignement des passages (16).

10. Appareil selon l'une quelconque des revendications précédentes, dans lequel les moyens d'entraînement (30) sont conçus pour faire tourner la buse (10) d'au moins 360°.

11. Appareil selon l'une quelconque des revendications précédentes, dans lequel l'appareil comprend en outre des seconds moyens d'entraînement, les seconds moyens d'entraînement étant conçus pour déplacer la buse (10) dans une direction verticale et/ou horizontale.

12. Appareil selon l'une quelconque des revendications précédentes, comprenant en outre des moyens de transport (50) pour déplacer un réceptacle (55) vers un emplacement pour recevoir la composition glacée en provenance de la buse (10).

13. Appareil selon la revendication 12, dans lequel les moyens de fermeture hermétique (20) sont indexés sur le mouvement du réceptacle (55).

14. Procédé de préparation d'une confiserie glacée, le procédé comprenant simultanément l'extrusion d'au moins trois des écoulements d'une ou plusieurs compositions glacées à travers une buse lors de la rotation de la buse ;
**caractérisé en ce qu'**au moins un de la pluralité d'écoulements est interrompu à l'intérieur de la buse.

15. Procédé selon la revendication 14, dans lequel la buse est tournée autour d'un axe vertical.

16. Procédé selon la revendication 14 ou la revendication 15, dans lequel la pluralité d'écoulements de la ou des compositions sont extrudés à travers la buse dans une seule direction d'écoulement.

17. Procédé selon la revendication 16, dans lequel la buse est tournée autour d'un axe parallèle à la direction de l'écoulement.

18. Procédé selon la revendication 16 ou 17, dans lequel la direction de l'écoulement est verticale.

19. Procédé selon l'une quelconque des revendications 14 à 18, dans lequel l'au moins un de la pluralité des écoulements est indépendamment interrompu à l'intérieur de la buse.

20. Procédé selon l'une quelconque des revendications 14 à 19, dans lequel tous les écoulements de la pluralité d'écoulements sont interrompus indépendamment à l'intérieur de la buse.

21. Procédé selon les revendications 14 à 20, dans lequel tous les écoulements de la pluralité d'écoulements sont interrompus simultanément à l'intérieur de la buse.

22. Procédé selon l'une quelconque des revendications 14 à 21, dans lequel la pluralité d'écoulements comprend un premier écoulement d'une première composition glacée et un second écoulement d'une seconde composition glacée différente de la première composition glacée.

23. Confiserie glacée pouvant être obtenue par le procédé selon l'une quelconque des revendications 14 à 22.
